(19) Europäisches Patentamt
European Patent Office
Office européen des brevets

(11) **EP 2 167 948 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(21) Anmeldenummer: 08784722.4

(22) Anmeldetag: **11.07.2008**

(51) Int Cl.:
*G01N 21/88* (2006.01)      *G01B 11/25* (2006.01)
*G01B 11/30* (2006.01)

(86) Internationale Anmeldenummer:
**PCT/EP2008/005683**

(87) Internationale Veröffentlichungsnummer:
**WO 2009/007130 (15.01.2009 Gazette 2009/03)**

(54) **VERFAHREN UND VORRICHTUNG ZUM OPTISCHEN INSPIZIEREN EINER OBERFLÄCHE AN EINEM GEGENSTAND**

METHOD AND DEVICE FOR THE OPTICAL INSPECTION OF A SURFACE OF AN OBJECT

PROCÉDÉ ET DISPOSITIF D'INSPECTION OPTIQUE D'UNE SURFACE SUR UN OBJET

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.07.2007 DE 102007034689**

(43) Veröffentlichungstag der Anmeldung:
**31.03.2010 Patentblatt 2010/13**

(73) Patentinhaber: **Carl Zeiss AG**
**73447 Oberkochen (DE)**

(72) Erfinder: **KNUPFER, Klaus**
**73457 Essingen (DE)**

(56) Entgegenhaltungen:
EP-A- 1 170 572      JP-A- 11 063 959
JP-A- 2000 136 917   JP-A- 2001 059 717
US-A- 5 726 705      US-A1- 2003 016 366

EP 2 167 948 B1

**Beschreibung**

Die vorliegende Erfindung betrifft ein Verfahren zum optischen Inspizieren einer Oberfläche an einem Gegenstand gemäß dem Oberbegriff des Anspruchs 1.

Die Erfindung betrifft ferner eine Vorrichtung zum optischen Inspizieren einer Oberfläche an einem Gegenstand gemäß dem Oberbegriff des Anspruchs 14.

Ein solches Verfahren und eine solche Vorrichtung sind beispielsweise aus DE 103 17 078 A1, US 2003/0016366 A1, oder EP 1 170 572 A2 bekannt.

Bei der industriellen Fertigung von Produkten spielt die Produktqualität eine immer wichtigere Rolle. Hohe Qualität kann einerseits durch entsprechend ausgelegte, stabile Fertigungsprozesse erreicht werden. Andererseits müssen die Qualitätsparameter eines Produktes möglichst zuverlässig und vollständig kontrolliert werden, um Qualitätsmängel frühzeitig zu erkennen. In vielen Fällen spielt die Qualität einer Oberfläche eine wichtige Rolle für die Produkteigenschaften. Dabei kann es sich um dekorative Oberflächen handeln, wie etwa Lackoberflächen bei Kraftfahrzeugen, oder um technische Oberflächen, wie zum Beispiel die Oberfläche von fein bearbeiteten metallischen Kolben oder Lagern.

Es gibt bereits eine Vielzahl von Vorschlägen und Konzepten, um solche Oberflächen automatisiert zu prüfen. Diese sind jedoch in aller Regel nur für einen speziellen Anwendungsfall einsetzbar, weil sie hohes a priori Wissen über die zu inspizierende Oberfläche voraussetzen. Darüber hinaus sind die bekannten Verfahren und Vorrichtungen häufig nicht ausgereift genug, um eine effiziente und zuverlässige Inspektion von Oberflächen unter Industriebedingungen zu ermöglichen. Infolgedessen wird beispielsweise in der Automobilindustrie bis heute in erheblichem Ausmaß eine visuelle Inspektion von Lackoberflächen durch geschulte Personen durchgeführt. Der Automatisierungsgrad bei der Inspektion von Lackoberflächen ist wesentlich geringer als der Automatisierungsgrad in der Fertigung selbst. Ein Beispiel für eine Vorrichtung zur visuellen Inspektion einer Lackoberfläche ist in US 5,636,024 beschrieben. Die bekannte Vorrichtung beinhaltet einen Tunnel, durch den die Kraftfahrzeuge mit den zu inspizierenden Lackoberflächen transportiert werden. An den Innenwänden des Tunnels befinden sich streifenförmige Lichtquellen, die ein Streifenmuster aus hellen und dunklen Streifen erzeugen. Diese Streifenmuster werden von der Lackoberfläche der Kraftfahrzeuge reflektiert. Die Inspektion der Lackoberfläche wird von Personen durchgeführt, die im Tunnel stehen und die Reflexionen des Streifenmusters an der Lackoberfläche visuell prüfen. Es ist leicht nachvollziehbar, dass eine solche Vorgehensweise stark von den Fähigkeiten des Beobachters abhängt und daher nur eine begrenzte Zuverlässigkeit bietet. Außerdem ist eine solche Vorgehensweise arbeitsintensiv und somit teuer.

Die eingangs genannte DE 103 17 078 A1 beschreibt ein Verfahren und eine Vorrichtung, bei denen ein Streifenmuster mit einem sinusförmigen Intensitätsverlauf auf einen Schirm projiziert wird, der schräg über einer zu inspizierenden Oberfläche angeordnet ist. Das projizierte Muster wird verändert oder bewegt, so dass entsprechend veränderte Streifenmuster auf die Oberfläche fallen. Während oder nach dem Verändern/Bewegen des Musters wird jeweils mindestens ein Bild der Oberfläche mit dem reflektierten Muster aufgenommen. Durch eine mathematische Verknüpfung der zu verschiedenen Zeitpunkten aufgenommenen Bilder soll ein Ergebnisbild erzeugt werden, anhand dessen defekte Bereiche und defektfreie Bereiche der Oberfläche rechnerisch und/oder visuell unterschieden werden können. Weitere Verfahren und Vorrichtungen dieser Art sind aus DE 198 21 059 C2, DE 10 2004 033 526 A1, US 6,100,990, einer Publikation von Markus Knauer mit dem Titel "Vermessung spiegelnder Oberflächen - eine Aufgabe der optischen drei D-Sensorik", erschienen in der DE-Zeitschrift Photonik, Ausgabe 4/2004, Seiten 62 bis 64 oder aus einer Publikation von Sören Kammel, "Deflektometrie zur Qualitätsprüfung spiegelnd reflektierender Oberflächen", erschienen in der DE-Zeitschrift tm - Technisches Messen, Ausgabe 4/2003, Seiten 193 bis 198 bekannt. All diese Verfahren und Vorrichtungen besitzen den Nachteil, dass nur relativ kleine Oberflächen inspiziert werden können, die in einer zumindest weitgehend bekannten und definierten Position und Ausrichtung zu dem Projektionsschirm mit dem Streifenmuster angeordnet sind. Eine zuverlässige und effiziente Inspektion von Lackoberflächen bei Kraftfahrzeugen ist mit diesen Vorrichtungen nicht möglich.

Aus einer Publikation von R. Seulin et al., "Dynamic Lighting System for Specular Surface Inspection", erschienen in Proceedings of SPIE, Vol. 4301 (2001), Seiten 199-206, sind ein Verfahren und eine Vorrichtung bekannt, bei denen ein Streifenmuster mit einem rechteckförmigen Intensitätsverlauf verwendet wird. Das Streifenmuster fällt auf die zu inspizierende Oberfläche. Eine Kamera blickt senkrecht von oben auf die zu inspizierende Oberfläche. Bei einer defektfreien Oberfläche sieht die Kamera genau die hellen und dunklen Streifen. Ein Oberflächendefekt, wie etwa eine Beule, hat jedoch zur Folge, dass Licht von einem hellen Streifen in das Abbild eines dunklen Streifens abgelenkt wird, so dass in dem Abbild des dunklen Streifens ein heller Lichtpunkt sichtbar ist. Um eine Oberfläche vollständig zu inspizieren, müssen die hellen Streifen über die Oberfläche wandern, was entweder durch Bewegen des Gegenstandes mit der zu inspizierenden Oberfläche oder durch Verändern des Streifenmusters erreicht werden kann. Letzteres ist nach der Publikation die bevorzugte Variante, weil eine vollflächige Inspektion bei komplexen Geometrien ansonsten nicht gewährleistet sei. Um störende Einflüsse von Fremdlicht zu vermeiden, soll der Gegenstand mit der zu inspizierenden Oberfläche in einem Tunnel angeordnet sein. Wenngleich dieses Verfahren prinzipiell die Inspektion von großen Oberflächen ermöglicht, ist es im Hinblick auf die eingangs beschriebenen Anforderungen nicht optimal. Es bestehen Zweifel an der Erkennungssicherheit und Zuverlässigkeit des Verfahrens. Darüber hinaus muss die Kamera möglichst senkrecht zu der zu inspizierenden Oberfläche ausgerichtet sein, was eine effiziente Oberflächeninspektion von beliebig geformten Gegenstände erschwert.

US 5,726,705 offenbart ein Verfahren und eine Vorrichtung zur Inspektion einer Kraftfahrzeugoberfläche. Das Kraftfahrzeug wird hier durch eine brückenartige Anordnung transportiert, an der eine Vielzahl von Kameras angeordnet sind. Die Kraftfahrzeugoberfläche wird mit einem Streifenmuster mit einem rechteckförmigen Intensitätsverlauf beleuchtet. Die Auswertung der Kamerabilder erfolgt ähnlich, wie in der Publikation von Seulin beschrieben ist. Die Schwächen dieser Vorgehensweise zeigen sich bei US 5,726,705 darin, dass für die Inspektion der Motorhaube ein anderer Satz von Kameras benötigt wird als für die Inspektion des Daches. Daher werden sehr viele Kameras benötigt, was einen hohen Investitions- und Bildverarbeitungsaufwand zur Folge hat. Des Weiteren bestehen auch bei diesem System Zweifel, ob alle denkbaren Oberflächendefekte, wie insbesondere kleine Kratzer, Pickel, Krater, Poren etc. zuverlässig erkannt werden.

Vor diesem Hintergrund ist es eine Aufgabe der vorliegenden Erfindung, ein alternatives Verfahren und eine Vorrichtung anzugeben, um eine Oberfläche weitgehend automatisiert, schnell und zuverlässig zu inspizieren. Vorzugsweise sollen das Verfahren und die Vorrichtung universell einsetzbar sein, und sie sollen sich für die Inspektion von großen Oberflächen eignen, insbesondere zur Inspektion von Lackoberflächen bei Kraftfahrzeugen.

Diese Aufgabe wird nach einem Aspekt der Erfindung durch ein Verfahren der eingangs genannten Art gelöst, bei dem das erste und weitere Streifenmuster beim Verschieben der Oberfläche über die Schiebedistanz so geschnitten werden, dass für jedes Streifenmuster eine individuelle, ganzzahlige Anzahl von Perioden durchlaufen wird, wobei die Anzahl eine effektive Ortsfrequenz darstellt, anhand der die Streifenmuster getrennt werden.

Nach einem weiteren Aspekt der Erfindung wird diese Aufgabe durch eine Vorrichtung der eingangs genannten Art gelöst, bei der das erste und weitere Streifenmuster beim Verschieben der Oberfläche über die Schiebedistanz so geschnitten werden, dass für jedes Streifenmuster eine individuelle, ganzzahlige Anzahl von Perioden durchlaufen wird, wobei die Anzahl eine effektive Ortsfrequenz darstellt, anhand der die Streifenmuster getrennt werden.

Die Trennung erfolgt mit dem im Oberbegriff des Anspruchs 12 genannten Filter.

Das neue Verfahren und die neue Vorrichtung verwenden ein Muster, das mehrere Teilmuster beinhaltet, die so überlagert sind, dass die Teilmuster gemeinsam auf die zu inspizierende Oberfläche fallen. Vorzugsweise beinhaltet das Gesamtmuster eine additive Überlagerung der verschiedenen Streifenmuster. Eine additive Überlagerung kann relativ einfach erzeugt werden, und sie ermöglicht eine einfache Trennung der Teilmuster vor oder bei der Auswertung der Bilder. Prinzipiell könnten die verschiedenen Streifenmuster jedoch auch multiplikativ oder auf andere Weise überlagert sein.

Die zumindest zwei verschiedenen Streifenmuster sind so überlagert, dass die Teilmuster zeitgleich auf die zu inspizierenden Oberflächenpunkte fallen. Daher stehen an jeder Position des Gegenstandes mehrere Streifenmuster zur Verfügung, deren Auswertung die Bestimmung von Eigenschaften der Oberfläche ermöglicht. Infolge dessen steht eine höhere Informationsdichte bei gleicher Anzahl von Aufnahmepositionen zur Verfügung. Die höhere Informationsdichte ermöglicht eine detailliertere und flexiblere Analyse der zu inspizierenden Oberfläche.

In Ausgestaltungen sind die verschiedenen Streifenmuster spektral codiert, d.h. sie besitzen unterschiedliche Farben. In diesen Ausführungsbeispielen können die verschiedenen Streifenmuster beim Aufnehmen der Bilder durch Verwendung von geeigneten Vorsatzfiltern (Farbfiltern) getrennt werden. Die Aufnahme der Bilder kann mit mehreren Bildaufnahmeeinheiten erfolgen, wobei für jedes spektral codierte Streifenmuster zumindest eine Bildaufnahmeeinheit verwendet wird, die an die Spektralfarbe des jeweiligen Streifenmusters angepasst ist. Alternativ hierzu kann eine Filterung auf Basis von Spektralfarben mit Hilfe von Wechselfiltern realisiert sein, die zeitlich nacheinander vor den verwendeten Bildaufnahmeeinheiten positioniert werden, oder die Spektralfilterung könnte nach der Aufnahme der Bilder mit Hilfe von Verfahren der digitalen Bildverarbeitung erfolgen.

Erfindungsgemäß unterscheiden sich die zumindest zwei verschiedenen Streifenmuster in Bezug auf die Frequenz, mit der jedes Streifenmuster in der Bildfolge erscheint, die von den nacheinander aufgenommenen Bildern an den unterschiedlichen Positionen gebildet wird. Die verschiedenen Streifenmuster sind hier in gewisser Weise "räumlich frequenzcodiert". Diese Frequenz wird im folgenden als "effektive Ortsfrequenz" bezeichnet. Sie ist ein Maß für die Anzahl von Perioden, mit der das jeweilige Streifenmuster in der Bildfolge erscheint. In den bevorzugten Ausgestaltungen werden die verschiedenen Streifenmuster durch eine algorithmische Filterung anhand der effektiven Ortsfrequenzen getrennt.

Alle Ausgestaltungen des neuen Verfahrens und der neuen Vorrichtung besitzen den Vorteil, dass sie die Bestimmung von Eigenschaften der Oberfläche auf sehr schnelle, platzsparende und kostengünstige Weise ermöglichen. Die Überlagerung der verschiedenen Streifenmuster und deren spätere Trennung bei oder nach der Bildaufnahme machen es möglich, großflächige Muster kostengünstig und raumsparend zu realisieren. Andererseits ermöglicht die zeitgleiche Verwendung von überlagerten Streifenmustern eine flexiblere und genauere Inspektion von Oberflächen. Beispielsweise sind dünne Streifen besser für die Inspektion einer stark glänzenden Oberfläche geeignet als breite Streifen. Umgekehrt eignen sich breite Streifen besser zur Inspektion einer diffus streuenden Oberfläche. Des Weiteren sind verschiedene Streifenbreiten von Vorteil, wenn Oberflächen mit unterschiedlich starken Krümmungsradien und/oder Ausdehnungen inspiziert werden sollen. Schließlich sind für die vollständige Inspektion von Oberflächen Streifenmuster von Vorteil, die in unterschiedlichen Richtungen verlaufen. Nach dem neuen Verfahren und der neuen Vorrichtung können solche verschiedenen Streifenmuster zu einem Gesamtmuster überlagert und in Abhängigkeit von den Anforderungen an die Oberfläche getrennt ausgewertet werden. Das neue Verfahren und die neue Vorrichtung sind daher universell einsetzbar und sie eignen sich insbesondere zur Inspektion von großen Oberflächen, weil die Überlagerung der verschiedenen Streifenmuster eine kompakte und raumsparende Realisierung ermöglicht. Des Weiteren können Bilder mit den überlagerten Streifenmustern sehr schnell aufgenommen werden, so dass bereits nach kurzer Zeit eine Vielzahl von Bilddaten für die Auswertung zur Verfügung steht. Insgesamt eignen sich das neue Verfahren und die neue Vorrichtung daher sehr gut zur automatisierten Inspektion von Lackoberflächen bei Kraftfahrzeugen, wenngleich das Verfahren und die Vorrichtung auch bei allen anderen Arten von Oberflächeninspektionen vorteilhaft eingesetzt werden können. Die oben genannte Aufgabe ist daher vollständig gelöst.

Erfindungsgemäß sind die erste und die weitere räumliche Periode entlang der Schiebedistanz unterschiedlich lang.

In dieser Ausgestaltung erscheinen der erste und der weitere räumliche Intensitätsverlauf in den Bildern mit verschiedenen effektiven Ortsfrequenzen. Anders ausgedrückt sind die Perioden der Streifenmuster parallel zu der Schieberichtung unterschiedliche bruchteile der definierten Schiebedistanz. Beispielsweise kann das erste Streifenmuster eine räumliche Periode parallel zur Schieberichtung besitzen, die gleich der definierten Schiebedistanz ist. Die effektive Ortsfrequenz wäre hier gleich 1 bezogen auf die Schiebedistanz. Ein anderes Streifenmuster kann demgegenüber eine räumliche Periode parallel zur Schieberichtung besitzen, die ein Drittel der definierten Schiebedistanz ist. Diese weitere Streifenmuster besitzt daher eine effektive Ortsfrequenz von 3. Die effektiven Ortsfrequenzen werden durch eine algorithmische Filterung bei der Verarbeitung der Bilddaten getrennt. In vorteilhaften Ausführungsbeispielen werden die Bilddaten der Bildfolge mit Vergleichssignalen korreliert, die die erwarteten effektiven Ortsfrequenzen besitzen. Diese Ausgestaltung ist äußerst vorteilhaft, weil sie unabhängig von der Spektralfarbe der Streifenmuster ist und daher alle überlagerten Streifenmuster dieselben Spektralfarben besitzen können. Die Auswertungen der verschiedenen Streifenmuster sind daher gut miteinander vergleichbar, und sie werden von der Farbe der untersuchten Oberfläche nicht beeinflusst. Darüber hinaus ermöglicht diese Ausgestaltung eine sehr variantenreiche Überlagerung von Streifenmustern.

Erfindungsgemäß besitzen die verschiedenen Streifenmuster unterschiedliche, ganzzahlige effektive Ortsfrequenzen relativ zu der Schiebedistanz.

In dieser Ausgestaltung sind die räumlichen Perioden der Streifenmuster so gewählt, dass die Bildfolge der Bilder, die entlang der Schiebedistanz aufgenommen werden, jedes Streifenmuster mit einer ganzzahligen effektiven Ortsfrequenz enthält, wobei sich die effektiven Ortsfrequenzen der verschiedenen Streifenmuster unterscheiden. Die tatsächliche Ortsfrequenz eines Streifenmusters ist ein Maß für die Anzahl der räumlichen Perioden des Streifenmusters bezogen auf einen Längenabschnitt, der senkrecht zu dem Verlauf der Streifen gemessen wird. Die effektive Ortsfrequenz kann sich von der tatsächlichen Ortsfrequenz unterschieden, wenn nämlich das Streifenmuster beim Verschieben relativ zu dem Messobjekt unter einem Winkel ungleich 90° geschnitten wird, also schräg. Die effektive Periode wird dadurch länger, die effektive Ortsfrequenz kleiner.

In dieser Ausgestaltung besitzt jedes Streifenmuster eine Periode, die entlang der Schiebedistanz einmal oder mehrfach vollständig durchlaufen wird. Gleichzeitig unterschieden sich die Perioden der Streifenmuster parallel zu der Schiebedistanz. Die Ausgestaltung in Kombination mit der zuvor beschriebenen Ausgestaltung ermöglicht eine sehr einfache Trennung der verschiedenen Ortsfrequenzen . Darüber hinaus ist diese Ausgestaltung auch für sich genommen vorteilhaft, weil sie eine einfache Auswertung der Bilder ermöglicht, insbesondere nach der sogenannten m-Bucket-Methode. Nach dieser Methode werden jeweils m Bilder eines Oberflächenpunktes, die ein sinusförmiges Streifenmuster im Abstand von jeweils 1/m zeigen, gemeinsam ausgewertet, um die lokale Oberflächenneigung des Oberflächenpunktes zu bestimmen. Bekannt ist dies für m = 4. Die m-Bucket-Methode ermöglicht eine sehr schnelle Auswertung und die Detektion von sehr kleinen Oberflächendefekten.

In einer weiteren Ausgestaltung sind die unterschiedlichen Positionen entlang der definierten Schiebedistanz mit relativen Abständen verteilt, die kleiner sind als die kleinste räumliche Periode aller verwendeten Intensitätsverläufe geteilt durch 2.

In dieser Ausgestaltung wird für jeden Oberflächenpunkt eine Anzahl von Bildern aufgenommen, die mehr als doppelt so groß ist wie die größte effektive Ortsfrequenz der Streifenmuster. Des Weiteren werden die Bilder in jeweils gleichen relativen Abständen aufgenommen. Letzteres ist vorteilhaft für die Verwendung der erwähnten m-Bucket-Methode. Ersteres vereinfacht die Trennung der verschiedenen Streifenmuster durch Filterung nach der effektiven Ortsfrequenz, weil Mehrdeutigkeiten vermieden werden, die andernfalls aufgrund von Aliasing-Effekten auftreten könnten.

In einer weiteren Ausgestaltung wird der Gegenstand mit der Oberfläche stationär angeordnet, wobei das Muster mit den Intensitätsverläufen relativ zu der Oberfläche verändert wird.

In einer Variante dieser Ausgestaltung kann das gesamte Muster einschließlich aller Teilmuster relativ zu dem Gegenstand verschoben werden. In anderen Varianten werden die Teilmuster individuell verschoben und das Gesamtmuster wird jeweils neu berechnet. In beiden Varianten kann das Gesamtmuster beispielsweise auf einem LCD-Schirm oder auf einer "Tapete" aus organischen Leuchtdioden (OLED) ausgegeben werden. Die Ausgestaltung ist vorteilhaft, wenn die Bewegung des Gegenstandes während der Inspektion schwierig ist und/oder zu Verfälschungen führen könnte, beispielsweise wenn sich die Oberfläche durch Erschütterungen verändert. Darüber hinaus ermöglicht diese Ausgestaltung die Verwendung von sehr komplexen Gesamtmustern, und sie ist sehr flexibel.

In einer anderen Ausgestaltung wird das Muster mit den Intensitätsverläufen stationär angeordnet, wobei der Gegenstand mit der Oberfläche relativ zu dem Muster verschoben wird.

Diese Ausgestaltung ist von Vorteil, wenn sehr großflächige Muster für die Inspektion von großen Oberflächen benötigt werden. Stationäre Muster lassen sich in diesen Fällen kostengünstiger realisieren, insbesondere wenn das Gesamtmuster als "passives" und permanentes Muster auf einer Wand, einem Schirm oder einem anderen Träger angeordnet ist. Weitere Vorteile und Varianten dieser Ausgestaltung sind Gegenstand einer parallelen PCT-Anmeldung EP2008005682 (WO2009/007129), die dieselbe Priorität in Anspruch nimmt wie die vorliegende Anmeldung.

In einer weiteren Ausgestaltung sind das erste und das weitere Streifenmuster relativ zueinander stationär.

In dieser Ausgestaltung bewegen sich die Teilmuster gegeneinander nicht. Diese Ausgestaltung ermöglicht eine sehr kostengünstige Realisierung, da sie insbesondere die Verwendung von gedruckten, gemalten und anderen passiven Mustern erlaubt. Dies ist besonders überraschend, wenn das erste und das weitere Streifenmuster verschiedene effektive Ortsfrequenzen besitzen, weil nicht zu erwarten war, dass die verschiedenen Streifenmuster trotz dieser Unterschiede relativ zueinander stationär gehalten werden können. Tatsächlich ist dies jedoch möglich, wie weiter unten anhand von bevorzugten Ausführungsbeispielen erläutert wird.

In einer weiteren Ausgestaltung weist das erste Streifenmuster erste Streifen auf und das zumindest eine weitere Streifenmuster weist weitere Streifen auf, wobei sich die ersten und die weiteren Streifen kreuzen.

In dieser Ausgestaltung verlaufen die Streifen der zumindest zwei verschiedenen Streifenmuster in unterschiedlichen Richtungen. Dies ist von Vorteil, weil Oberflächendefekte parallel zur Streifenrichtung nicht oder nur schwer erkannt werden können. Die Bereitstellung von gekreuzten Streifen innerhalb eines Gesamtmusters ermöglicht es, solche Oberflächendefekte ohne oder mit geringem a priori Wissen auf schnelle Weise zu detektieren.

In einer weiteren Ausgestaltung bilden die ersten Streifen und die weiteren Streifen jeweils gleiche räumliche Perioden, sie sind jedoch relativ zu der Schiebedistanz unterschiedlich geneigt. In einer besonders bevorzugten Ausgestaltung verlaufen die verschiedenen Streifen orthogonal zueinander und sie besitzen gleiche Streifenbreiten und/oder gleiche räumliche Perioden orthogonal zum Verlauf der Streifen.

Diese Ausgestaltung ermöglicht es, zwei grundsätzlich gleiche Streifenmuster zu verwenden, die orthogonal zueinander angeordnet sind. Zwei solche Streifenmuster eignen sich optimal, um Oberflächendefekte unabhängig von ihrer Richtung und ihrem Verlauf zuverlässig zu detektieren. Wie sich überraschend gezeigt hat, können die an sich gleichen Streifenmuster (abgesehen von der unterschiedlichen Richtung der Streifen) einfach getrennt werden, wenn sie relativ zu der Schiebedistanz bzw. relativ zu der Schieberichtung unterschiedlich geneigt sind, weil die beiden Streifenmuster dann mit unterschiedlichen effektiven Ortsfrequenzen in den Bildern erscheinen. Diese Ausgestaltung ermöglicht daher eine sehr effiziente und kostengünstige Inspektion einer Oberfläche, die nur ein geringes a priori Wissen voraussetzt.

In einer weiteren Ausgestaltung weisen das erste Streifenmuster und das zumindest eine weitere Streifenmuster zueinander parallele erste und weitere Streifen auf.

In dieser Ausgestaltung verlaufen die Streifen des ersten und des zumindest einen weiteren Streifenmusters parallel zueinander. Vorteilhaft besitzen die verschiedenen Streifenmuster dabei verschiedene räumliche Perioden orthogonal zur Streifenrichtung. Mit anderen Worten sind die ersten und weiteren Streifen unterschiedlich breit. Diese Ausgestaltung ist vorteilhaft, um eine zu inspizierende Oberfläche unter ansonsten gleichen Bedingungen mit verschieden breiten Streifen zu inspizieren. Die Ausgestaltung ermöglicht eine sehr flexible Inspektion von Oberflächen mit geringem a priori Wissen.

In einer weiteren Ausgestaltung weist das Muster einen Bereich mit maximaler Helligkeit und einen weiteren Bereich mit minimaler Helligkeit auf, wobei die maximale und die minimale Helligkeit eine Intensitätsamplitude des Musters definieren, wobei jedes Streifenmuster eine Streifenmusteramplitude besitzt, und wobei die Summe der Streifenmusteramplituden aller Streifenmuster gleich der Intensitätsamplitude des (Gesamt-) Musters ist. Bevorzugt sind alle Streifenmusteramplituden gleich.

Diese Ausgestaltung ermöglicht eine kostengünstige Realisierung des neuen Verfahrens und der neuen Vorrichtung mit Hilfe eines "passiven" Gesamtmusters, das auf einem geeigneten Träger permanent angeordnet ist. Das Gesamtmuster kann beispielsweise mit Hilfe einer bedruckten Folie realisiert sein, die auf die Innenwand eines Inspektionstunnels geklebt ist. Die Ausgestaltung ist jedoch auch bei "aktiven" Mustern von Vorteil, die beispielsweise mit Hilfe von Leuchtdioden realisiert sind. Die Ausgestaltung besitzt den Vorteil, dass sich die Teilmuster in definierter Weise zu dem Gesamtmuster überlagern, ohne dass einzelne Teilmuster aufgrund eines begrenzten Dynamikbereichs des Gesamtmusters "abgeschnitten" werden. Wenn alle Streifenmusteramplituden gleich sind, vereinfacht sich die Auswertung und Vergleichbarkeit der einzelnen Streifenmuster.

In einer weiteren Ausgestaltung weisen die Streifenmuster jeweils eine sich räumlich zumindest weitgehend kontinuierlich ändernde Intensität auf. Besonders bevorzugt ist es, wenn jedes Streifenmuster einen sinusförmigen Intensitätsverlauf besitzt. Alternativ hierzu könnte der Intensitätsverlauf beispielsweise sägezahnförmig sein.

Diese Ausgestaltung ermöglicht eine recht einfache und genaue Auswertung der Streifenmuster in den aufgenommen Bildern, indem der (bekannte) Phasenverlauf jedes Streifenmusters an jedem Ort rekonstruiert wird. Die Verwendung von Sinusmustern ist vorteilhaft, weil Sinusmuster durch eine Tiefpassfilterung gut rekonstruiert werden können. Insgesamt ermöglicht diese Ausgestaltung eine einfache Bestimmung von lokalen Oberflächenneigungen, die wiederum eine zuverlässige Detektion von kleinsten Kratzern, Pickeln, Kratern oder Poren erlauben.

In einer weiteren Ausgestaltung sind die zumindest zwei verschiedenen Streifenmuster spektral unterschiedlich ausgebildet.

In dieser Ausgestaltung unterscheiden sich die zumindest zwei Streifenmuster hinsichtlich der Wellenlängen, die von den Streifen "abgegeben" werden. Beispielsweise können die ersten und zweiten Streifenmuster in unterschiedlichen Farben realisiert sein. Die unterschiedlichen Farben führen zu einer spektralen Codierung, mit deren Hilfe sich die verschiedenen Streifenmuster bei der Auswertung mit Hilfe von Spektralfiltern voneinander unterscheiden lassen. Die unterschiedlichen Wellenlängen können im sichtbaren Wellenlängenbereich und/oder im Infrarot und/oder im UV-Bereich liegen. Diese Ausgestaltung ist einerseits eine einfache Möglichkeit, um verschiedene überlagerte Streifenmuster überhaupt voneinander zu unterscheiden. Sie ist besonders vorteilhaft, wenn verschiedene Streifenmuster anhand von unterschiedlichen effektiven Ortsfrequenzen getrennt werden, weil eine zusätzliche spektrale Codierung eine noch höhere Anzahl von überlagerten Streifenmustern ermöglicht.

Ausführungsbeispiele der Erfindung sind in der Zeichnung dargestellt und werden in der nachfolgenden Beschreibung näher erläutert. Es zeigen:

Fig. 1 eine vereinfachte Darstellung eines Ausführungsbeispiels der neuen Vorrichtung mit einem Inspektionstunnel zum Inspizieren von Lack- oberflächen bei Kraftfahrzeugen,

Fig. 2 den Inspektionstunnel aus Fig. 1 in einem Querschnitt von vorne,

Fig. 3 eine schematische Darstellung zur Erläuterung eines Ausführungsbei- spiels des neuen Verfahrens,

Fig. 4 die Überlagerung von zwei sinusförmigen Intensitätsverläufen gemäß einem Ausführungsbeispiel des neuen Verfahrens,

Fig. 5 eine vereinfachte Darstellung eines Ausführungsbeispiels des neuen Verfahrens, und

Fig. 6 ein Flussdiagramm zur Erläuterung von Ausführungsbeispielen des Verfahrens.

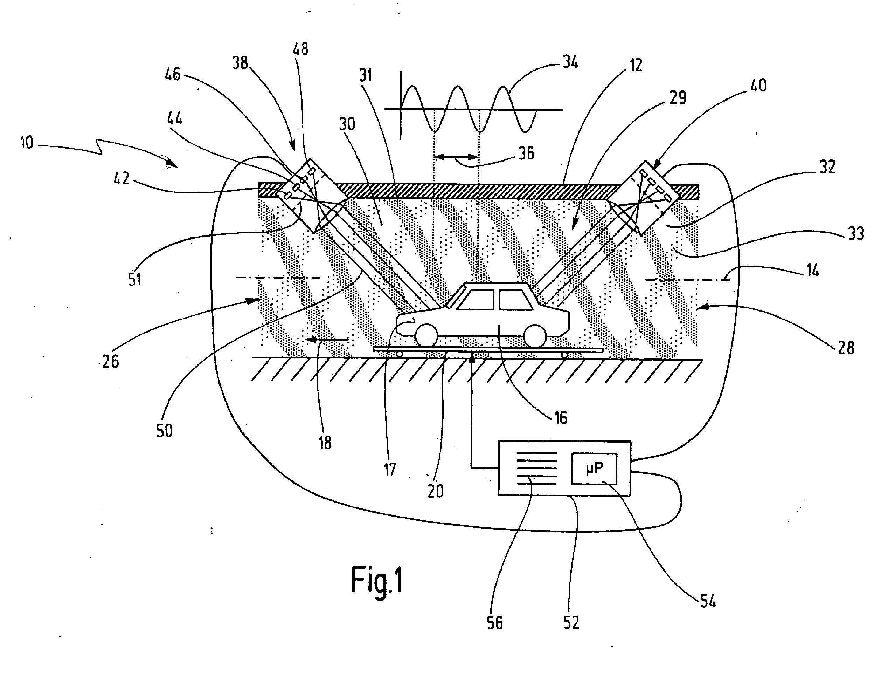

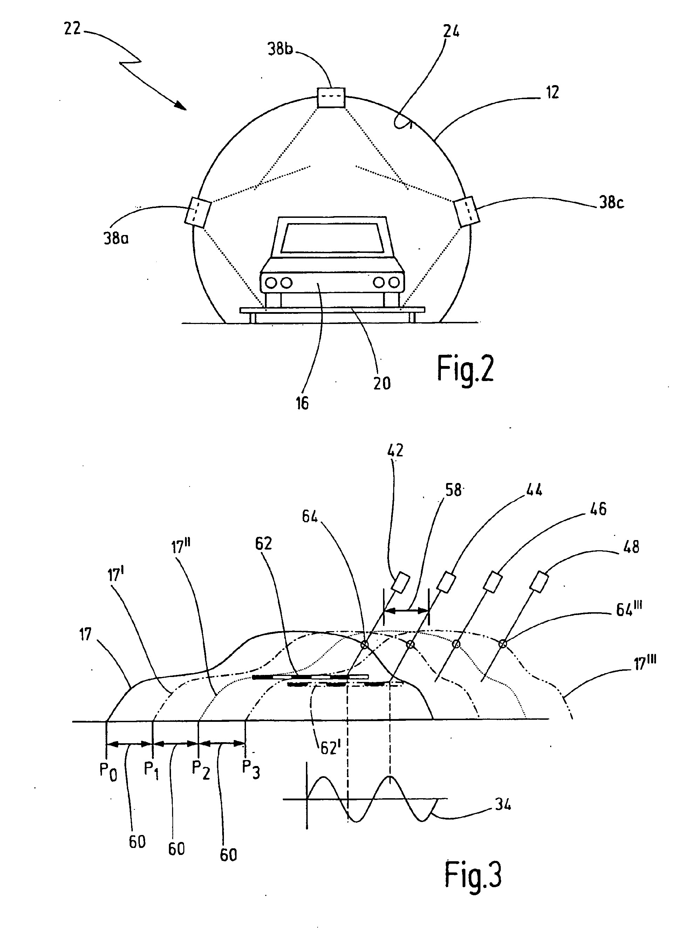

In Fig. 1 und 2 ist ein Ausführungsbeispiel der neuen Vorrichtung in der Gesamtheit mit der Bezugsziffer 10 bezeichnet.

Die Vorrichtung 10 beinhaltet einen Tunnel 12 mit einer Längsachse 14. In diesem Ausführungsbeispiel wird ein Auto 16 mit einer zu inspizierenden Lackoberfläche 17 in Richtung des Pfeils 18, der parallel zu der Längsachse 14 verläuft, durch den Tunnel 12 gezogen. Das Auto 16 ist hier auf einem Transportwagen 20 angeordnet, der mit Hilfe eines elektrischen Antriebs (nicht dargestellt) durch den Tunnel 12 gezogen wird. Alternativ könnte das Auto 16 auf einem Förderband angeordnet sein, oder das Auto 16 kann ohne Transportwagen 20 durch den Tunnel gezogen oder gefahren werden.

Wie man in Fig. 2 erkennen kann, besitzt der Tunnel 12 hier einen annähernd kreisförmigen Querschnitt 22, der einen Kreiswinkel von etwa 270° abdeckt. Prinzipiell sind auch andere Tunnelquerschnitte möglich, beispielsweise in Form eines Polygons. Ein kreisförmiger Tunnelquerschnitt oder ein anderer knickfreier Tunnelquerschnitt ist aus heutiger Sicht bevorzugt, weil die nachfolgend erläuternden Muster dann weitgehend stetig und ohne Stoßstellen realisiert werden können, was die Inspektion der Lackoberfläche vereinfacht. Wenn lediglich eine Seite des Autos 16 inspiziert werden soll, genügt prinzipiell auch eine Wand oder ein Schirm, an der das Auto positioniert und/oder vorbeigeführt wird.

Der Tunnel 12 besitzt eine Innenwand 24, an der hier zwei einander überlagerte Streifenmuster 26, 28 angeordnet sind. In einem Ausführungsbeispiel sind die Streifenmuster 26, 28 auf eine Folie gedruckt, die an die Innenwand 24 des Tunnels 12 geklebt ist. In einem anderen Ausführungsbeispiel ist die Innenwand 24 des Tunnels 12 mit den Streifenmustern 26, 28 bemalt. In einem weiteren Ausführungsbeispiel sind an der Innenwand 24 hinter einem Schirm eine Vielzahl von Leuchtdioden angeordnet, mit denen die Streifenmuster 26, 28 erzeugt werden. In noch einem weiteren Ausführungsbeispiel können die Streifenmuster auf die Innenwand 24 des Tunnels 12 projiziert sein.

Das Streifenmuster 26 besteht aus helleren Streifen 30 und dunkleren Streifen 31, die abwechselnd nebeneinander und parallel zueinander verlaufen. Das Streifenmuster 28 enthält hellere Streifen 32 und dunklere Streifen 33, die parallel zueinander und nebeneinander angeordnet sind. In einem Ausführungsbeispiel sind die dunkleren Streifen 31, 33 spektral unterschiedlich ausgebildet, was in Fig. 1 anhand von unterschiedlichen "Punktdichten" dargestellt ist. Beispielsweise sind die dunkleren Streifen 31, 33 in verschiedenen Farben realisiert, wie zum Beispiel in Blau und in Rot. In anderen Ausführungsbeispielen sind die Streifenmuster 26, 28 (und ggf. weitere Streifenmuster, die hier nicht dargestellt sind) Schwarz-Weiß-Muster oder andere monochrome Muster. Allen Ausführungsbeispielen ist gemeinsam, dass die verschiedenen Streifenmuster 26, 28 einander überlagert sind und somit ein Gesamtmuster 29 mit einer Vielzahl von helleren und dunkleren Bereichen bilden. Die unterschiedlichen Streifenmuster 26, 28 fallen gemeinsam auf die zu inspizierende Oberfläche 17 und werden vor dem Bestimmen von Eigenschaften der Oberfläche 17 mit Hilfe einer geeigneten Filterung getrennt und daran anschließend separat ausgewertet. Es ist möglich, dass für eine bestimmte Anwendung lediglich eines der verschiedenen Streifenmuster 26, 28 ausgewertet wird, um Eigenschaften der Oberflächen 17 zu bestimmen.

Es ist weiterhin möglich, dass die Streifenmuster 26, 28 aufgrund der gegenseitigen Überlagerung in dem Gesamtmuster 29 nicht mehr ohne Weiteres als einzelne Streifenmuster zu erkennen sind. Stattdessen kann ein unbefangener Beobachter ein Karomuster oder ein anderes zumindest weitgehend periodisches Muster sehen. Dies steht der vorliegenden Erfindung nicht entgegen, solange einzelne Streifenmuster 26, 28 in dem Gesamtmuster 29 enthalten sind und durch eine geeignete Filterung voneinander getrennt werden können.

Jedes Streifenmuster 26, 28 bildet einen Intensitätsverlauf 34, der in Fig. 1 beispielhaft für das erste Streifenmuster 26 dargestellt ist. In bevorzugten Ausführungsbeispielen ist der Intensitätsverlauf 34 sinusförmig. Prinzipiell sind jedoch auch andere Intensitätsverläufe möglich, die eine definierte räumliche Periode besitzen. Die (effektive) räumliche Periode des Intensitätsverlaufs 34 ist in Fig. 1 bei der Bezugsziffer 36 dargestellt. Prinzipiell genügt eine vollständige Periode. Bevorzugt erstreckt sich das Gesamtmuster 29 jedoch über eine Vielzahl von Perioden 36.

Mit den Bezugsziffern 38, 40 sind hier zwei Kameraköpfe bezeichnet, wobei der Kamerakopf 38 am vorderen Ende des Tunnels 12 angeordnet ist, während der Kamerakopf 40 am hinteren Ende des Tunnels 12 angeordnet ist. Jeder Kamerakopf 38, 40 besitzt hier vier Bildaufnahmeeinheiten 42, 44, 46, 48, die mit einem definierten Abstand relativ zueinander gestaffelt sind (siehe Fig. 3 und die nachfolgenden Erläuterungen). Die Blickrichtungen 50 der Bildaufnahmeeinheiten 42, 44, 46, 48 verlaufen hier parallel zueinander. In einem Ausführungsbeispiel, in dem die Streifenmuster 26, 28 spektral unterschiedlich codiert sind, kann jeder Kamerakopf 38, 40 ein variables Farbfilter 51 besitzen, mit dessen Hilfe wahlweise das eine oder das andere Streifenmuster 26, 28 für die Bildaufnahme selektiert werden kann. Alternativ hierzu könnte für jede farbliche Codierung ein eigener Satz von Bildaufnahmeeinheiten 42, 44, 46, 48 verwendet werden.

Wie man in Fig. 2 erkennen kann, besitzt die Vorrichtung 10 in bevorzugten Ausführungsbeispielen zumindest drei Kameraköpfe 38a, 38b, 38c am vorderen Ende des Tunnels sowie zumindest drei Kameraköpfe 40a, 40b, 40c am hinteren Ende (hier nicht dargestellt). Die Kameraköpfe 38a, 38b, 38c sind entlang der Querschnittsfläche des Tunnels 12 so verteilt, dass sie das Auto 16 aus unterschiedlichen Richtungen aufnehmen und weitgehend vollständig erfassen können. In einem Ausführungsbeispiel sind die Bildaufnahmeeinheiten 42, 44, 46, 48 als Zeilenkameras realisiert. Alternativ können die Bildaufnahmeeinheiten als Flächenkameras realisiert sein.

Mit der Bezugsziffer 52 ist in Fig. 1 eine Auswerte- und Steuereinheit bezeichnet, die einerseits dazu ausgebildet ist, die Vorschubbewegung 18 des Autos 16 zu steuern. Des Weiteren steuert die Auswerte- und Steuereinheit die Bildaufnahme mit den Bildaufnahmeeinheiten 42, 44, 46, 48. In bevorzugten Ausführungsbeispielen wird das Auto 16 kontinuierlich durch den Tunnel 12 bewegt. In anderen Ausführungsbeispielen erfolgt der Vorschub schrittweise, wobei nach jeweils einem Vorschubschritt eine Bildaufnahme erfolgt.

Die Auswerte- und Steuereinheit 52 beinhaltet außerdem einen Prozessor 54, sowie ein Programm 56, mit dessen Hilfe der Prozessor 54 die Bilddaten der Bildaufnahmeeinheiten 42, 44, 46, 48 verarbeitet, um Eigenschaften der Oberfläche 17 zu bestimmen. In bevorzugten Ausführungsbeispielen beinhaltet das Programm 56 digitale Filter, mit deren Hilfe die Streifenmuster 26, 28 nach der Bildaufnahme voneinander getrennt werden. Anschließend bestimmt der Prozessor 54 mit Hilfe des Programms 56 Eigenschaften der Oberfläche 17 in Abhängigkeit von den einzelnen Streifenmustern 26, 28. Es versteht sich, dass die Ergebnisse, die anhand der einzelnen Streifenmuster 26, 28 (also separat) gewonnen werden, in einem weiteren Signalverarbeitungsschritt miteinander verknüpft werden können, um beispielsweise einen Plausibilitätsvergleich durchzuführen und/oder ein optimales Streifenmuster für einen bestimmten Anwendungsfall auszuwählen.

Fig. 3 zeigt anhand einer Prinzipskizze eine Variante, die in bevorzugten Ausführungsbeispielen des neuen Verfahrens und der neuen Vorrichtung zum Einsatz kommt. Gleiche Bezugszeichen bezeichnen dieselben Elemente wie zuvor.

Fig. 3 zeigt die Oberfläche 17 an vier verschiedenen Positionen $P_0$, $P_1$, $P_2$, $P_3$. Außerdem sind die vier Bildaufnahmeeinheiten 42 bis 48 eines der Kameraköpfe 38, 40 dargestellt. Mit der Bezugsziffer 58 ist der relative Abstand von einer Bildaufnahmeeinheit 42 zur nächsten Bildaufnahmeeinheit 44 bezeichnet, wobei der Abstand 58 parallel zur Vorschubrichtung 18 der Oberfläche 17 gemessen ist. Mit der Bezugsziffer 60 sind Teilvorschübe bezeichnet, mit denen die Oberfläche 17 von einer Position $P_0$ zur nächsten Position $P_1$ verschoben wird. Mit der Bezugsziffer 62 ist ein Musterbild bezeichnet, d.h. ein Abbild des Streifenmusters 26 (oder 28), das von der Oberfläche 17 reflektiert wird. Bezugsziffer 62' zeigt das Musterbild 62 auf der Oberfläche 17' nach einem Vorschub 60.

Wie in Fig. 3 zu erkennen ist, wird ein Oberflächenpunkt 64 der Oberfläche 17 mit der Bildaufnahmeeinheit 42 an der Position $P_0$ aufgenommen. Es sei angenommen, dass zum Zeitpunkt der Bildaufnahme ein dunkler Streifenbereich auf den Oberflächenpunkt 64 fällt, was in Fig. 3 anhand der Blickrichtung 50 der Bildaufnahmeeinheit 42 dargestellt ist.

Aufgrund der gewählten Abstände 58 und Vorschübe 60 wird derselbe Oberflächenpunkt 64 an der Position $P_1$ mit der Bildaufnahmeeinheit 44 aufgenommen. Allerdings fällt zu diesem Zeitpunkt ein anderer Teil des Streifenmusters 26 auf den Oberflächenpunkt 64, was bei der Bezugsziffer 62' dargestellt ist. Ursache für die Veränderung des Musterbildes ist die relative Bewegung der Oberfläche 17 in Bezug auf das Streifenmuster 26.

Wie man anhand der Darstellung in Fig. 3 nachvollziehen kann, wird derselbe Oberflächenpunkt 64 anschließend auch mit den weiteren Bildaufnahmeeinheiten 46, 48 aufgenommen, wobei sich das Musterbild 62 am Oberflächenpunkt 64 jeweils verändert, weil die Oberfläche 17 in Richtung des Pfeils 18 verschoben wird. Im Ergebnis erhält man vier Abbilder des Oberflächenpunktes 64. Diese vier Abbilder werden in bevorzugten Ausführungsbeispielen nach der so genannten m-Bukket-Methode ausgewertet, um die lokale Oberflächenneigung an dem Oberflächenpunkt 64 zu bestimmen. Anhand der Oberflächenneigung lassen sich dann Oberflächendefekte, wie kleine Kratzer, Poren etc. detektieren.

Wie man anhand Fig. 3 erkennen kann, wird der durch das Streifenmuster 26 (oder 28) gebildete Intensitätsverlauf 34 mit den Bildaufnahmeeinheiten 42 bis 48 abgetastet, indem an den Schiebepositionen $P_0$ bis $P_3$ "Proben" des Intensitätsverlaufs 34 zusammen mit dem Oberflächenpunkt 64 aufgenommen werden. Aufgrund der bekannten Eigenschaften des Intensitätsverlaufs 34 (insbesondere der bekannten Periode 36) kann man mit den Proben die relative Lage des Oberflächenpunktes 64 zu dem Streifenmuster 26 und dann die lokale Oberflächenneigung bestimmen.

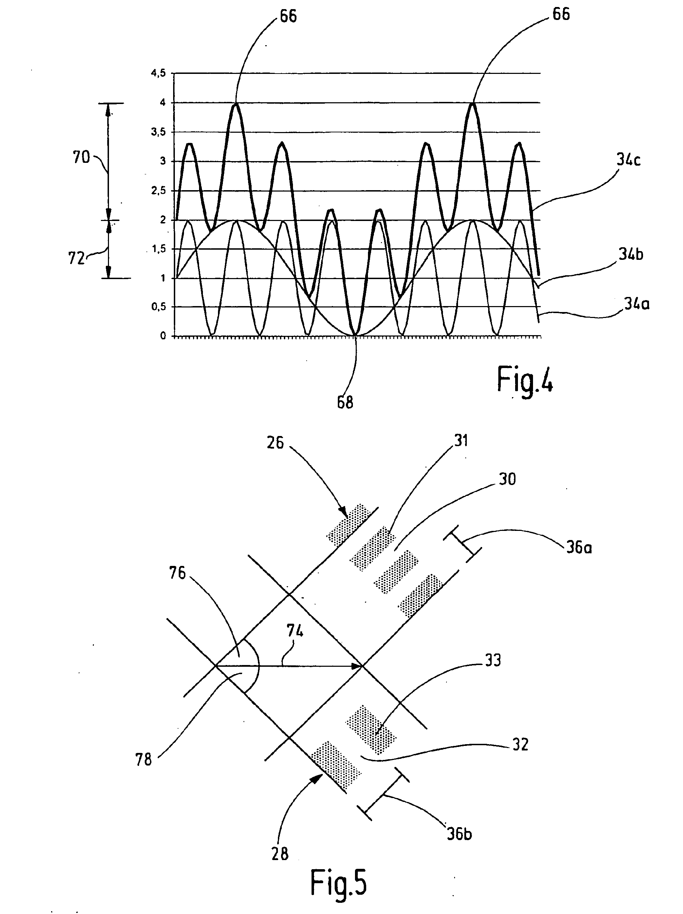

Fig. 3 zeigt die Situation vereinfacht für den Fall, dass lediglich ein Streifenmuster 26 mit einem daraus resultierenden Intensitätsverlauf 34 ausgewertet wird. In der Erfindung wird jedoch ein Gesamtmuster 29 verwendet, das aus mehreren verschiedenen Streifenmustern durch additive Überlagerung entsteht. Fig. 4 zeigt beispielhaft einen Intensitätsverlauf 34c, der durch additive Überlagerung von zwei Intensitätsverläufen 34a, 34b mit unterschiedlicher Periode bzw. Ortsfrequenz entsteht. Ortsfrequenz bezeichnet hier die Anzahl vollständiger Perioden 36 innerhalb einer definierten Strecke. Wie man aus der Darstellung in Fig. 4 erkennen kann, beinhaltet der Intensitätsverlauf 34c sowohl die höhere Ortsfrequenz des Intensitätsverlaufs 34a als auch die niedrigere Ortsfrequenz des Intensitätsverlaufs 34b. Die unterschiedlichen Ortsfrequenzen des kombinierten Intensitätsverlaufs 34c werden in bevorzugten Ausführungsbeispielen der Erfindung nach der Bildaufnahme wieder in die Teil-Intensitätsverläufe 34a, 34b getrennt, so dass anschließend jeder Teil-Intensitätsverlauf 34a, 34b nach dem in Fig. 3 beschriebenen Verfahren separat ausgewertet werden kann.

Wie man in Fig. 4 weiter erkennen kann, besitzt der überlagerte Intensitätsverlauf 34c Bereiche 66 mit maximaler Intensität ("Helligkeit") und Bereiche 68 mit minimaler Intensität. In einem Ausführungsbeispiel ist der Bereich 68 mit minimaler Intensität tiefschwarz, während der Bereich 66 mit maximaler Intensität hellweiß ist. Wenn die Streifenmuster 26, 28 mit Hilfe von aktiven Leuchtelementen erzeugt werden, sind die Bereiche 66 diejenigen, bei denen die Leuchtelemente mit maximaler Helligkeit leuchten. Die Differenz zwischen der maximalen Intensität und der bei minimalen Intensität definiert eine Intensitätsamplitude 70, die hier gleich der Hälfte des Differenzbetrags ist. Die Intensitätsamplitude des kombinierten Intensitätsverlaufs 34c ist hier gleich der Summe der Intensitätsamplituden der Teil-Intensitätsverläufe 34a, 34b.

Fig. 5 zeigt anhand einer schematischen Darstellung die Überlagerung von zwei Streifenmustern 26, 28 mit verschiedenen tatsächlichen Perioden 36a, 36b und verschiedenen Streifenrichtungen, wobei die Streifenmuster 26, 28 hier aus Gründen der Übersichtlichkeit jeweils nur angedeutet sind. Es versteht sich, dass die Streifenmuster 26, 28 vollflächig überlagert sind, um ein vollflächiges Gesamtmuster 29 zu erhalten.

Mit der Bezugsziffer 74 ist der Schiebevektor v und die Gesamtschiebedistanz bezeichnet, über die die zu inspizierende Oberfläche verschoben wird, um einen vollständigen Satz von Bilddaten für einen Oberflächenpunkt 64 aufzunehmen. In dem Ausführungsbeispiel gemäß Fig. 5 sind die Streifenmuster 26, 28 orthogonal zueinander, d.h. die Streifen 30/31 und 32/33 schneiden sich unter einem Winkel von 90°. Es sind jedoch auch andere Kreuzungswinkel der Streifenmuster möglich. Zusätzlich ist das überlagerte Gesamtmuster hier relativ zu dem Schiebevektor 74 geneigt. Im dargestellten Ausführungsbeispiel beträgt der Winkel 76 zwischen dem Schiebevektor 74 und dem Streifenverlauf des Streifenmusters 26 45°. Dementsprechend ist auch der Winkel 78 zwischen dem Schiebevektor 74 und dem Streifenverlauf des Streifenmusters 28 hier 45°. Die Winkel 76, 78 könnten in anderen Ausführungsbeispielen unterschiedlich sein, insbesondere dann, wenn die Perioden 36a, 36b der Streifenmuster 26, 28 gleich sind.

Wie man anhand Fig. 5 weiter sieht, wird die tatsächliche Periode 36a des Streifenmusters 26 über die Schiebedistanz 74 dreimal vollständig durchlaufen, während die Periode 36b des zweiten Streifenmusters 28 über dieselbe Schiebedistanz 74 nur zweimal durchlaufen wird. Die Streifenmuster 26, 28 erscheinen daher beim Verschieben der Oberfläche 17 entlang der Schiebedistanz 74 mit unterschiedlichen effektiven Ortsfrequenzen, und sie können anhand der effektiven Ortsfrequenzen durch eine geeignete digitale Filterung wieder getrennt werden. Um eine einfache und eindeutige Trennung der überlagerten Streifenmuster 26, 28 zu erreichen wird jedes Streifenmuster entlang der Schiebedistanz 74 mit einer ganzen Anzahl von Perioden abgetastet. Des Weiteren sind die Periodenzahlen für jedes Streifenmuster 26, 28 individuell und vorzugsweise ist die Anzahl der abgetasteten Perioden für jedes Streifenmuster kleiner als die Anzahl der über die Schiebedistanz 74 aufgenommenen Bilder geteilt durch 2. Die zuletzt genannte Bedingung ermöglicht eine eindeutige Rekonstruktion aller Streifenmuster aus den Abtastwerten.

Allgemein lässt sich die Bedingung für eine einfache Trennung der Streifenmuster anhand von effektiven Ortsfrequenzen folgendermaßen herleiten: Es gilt unter Bezug auf Fig. 5:

$$\frac{n_1 \cdot s_1}{\sin(\alpha_1)} = \frac{n_2 \cdot s_2}{\sin(\alpha_2)} = \frac{n_3 \cdot s_3}{\sin(\alpha_3)} = \ldots = v$$

wobei $n_i$ die Anzahl der effektiv abgetasteten Perioden beim Durchlauf der Schiebedistanz 74 ist, $s_1$ die Periode 36a, 36b der einzelnen Streifenmuster ist, $\alpha_i$ der Winkel 76, 78 zwischen dem jeweiligen Streifenmuster und dem Schiebevektor 74 ist, und $v$ die Schiebedistanz (= Betrag des Schiebevektors 74) ist. Zusätzlich sollte gelten, dass

$$n_i \cdot s_i < v$$

ist, da ansonsten über die Schiebedistanz 74 keine vollständige Periode durchlaufen wird. Anschaulich bedeuteten die Bedingungen, dass beim Verschieben der Oberfläche über die Distanz 74 alle Streifenmuster so geschnitten werden, dass für jedes Muster eine ganzzahlige und individuelle Anzahl von Perioden durchlaufen wird.

Betrachtet man anstelle der Winkel 76, 78 zwischen den Streifenmustern und dem Schiebevektor den Winkel zwischen zwei Streifenmustern, gilt:

$$\alpha_1 = \arctan\left(\frac{\sin(\beta)}{\cos(\beta) + \frac{n_2 \cdot s_2}{n_1 \cdot s_1}}\right)$$

mit

$$\alpha_2 = \beta - \alpha_1$$

und

$$l = \frac{n_1 \cdot s_1}{\sin(\alpha_1)}$$

Für den Spezialfall, dass die Streifenmuster orthogonal zueinander angeordnet sind, ist der Winkel $\beta = 90°$. Damit vereinfachen sich die Gleichungen zu

$$\alpha_1 = \pm\arctan\left(\frac{n_1 s_1}{n_2 s_2}\right)$$

$$\alpha_2 = 90° - \alpha_1$$

$$v = s \cdot \sqrt{(n_1 s_1)^2 + (n_2 s_2)^2} .$$

Wählt man die Perioden $s_1 = s_2 = s$ und die Anzahl der durchlaufenen Perioden $n_1 = 1$ und $n_2 = 2$, erhält man für den Schiebewinkel

$$\alpha_1 = \arctan\left(\frac{1}{2}\right) = 26{,}56°.$$ Die Schiebedistanz ist dann

$$v = s \cdot \sqrt{(1)^2 + (2)^2} = 2{,}236 \cdot s .$$

Dies bedeutet, dass ein Gesamtmuster aus zwei orthogonalen Streifenmustern mit jeweils gleichen tatsächlichen Perioden um 26,56° gegenüber dem Schiebevektor 74 verkippt werden muss, um zu erreichen, dass die Streifenmuster in den aufgenommenen Bildern mit den unterschiedlichen effektiven Ortsfrequenzen von $n_1 = 1$ und $n_2 = 2$ erscheinen. Anders ausgedrückt kann man orthogonale Streifenmuster mit gleicher tatsächlicher Periode, die additiv überlagert sind, zeitgleich aufnehmen und durch digitale Filterung der erhaltenen Bilddaten voneinander trennen, wenn das überlagerte Gesamtmuster unter einem Winkel von 26,56° relativ zu dem Schiebevektor gekippt ist, um unterschiedliche effektive Ortsfrequenzen in der Bildfolge zu erzeugen.

Ein weiterer Spezialfall ergibt sich, wenn mehrere Streifenmuster 26, 28 verwendet werden, deren Streifen alle parallel verlaufen. Typischerweise wird man den Winkel α zwischen dem Schiebevektor 74 und dem Verlauf der Streifen hier gleich 90° wählen. Damit vereinfachen sich die oben angegebenen Gleichungen zu

$$n_1 \cdot s_1 = n_2 \cdot s_2 = n_3 \cdot s_3 = \ldots$$

Wählt man die Anzahl der pro Schiebedistanz durchlaufenen Perioden beispielsweise zu $n_1 = 1$ und $n_2 = 12$, muss die Periode des zweiten Streifenmusters ein Zwölftel der Periode des ersten Streifenmusters sein. Man kann also parallele Streifenmuster überlagern, wenn die Periode der Einzelmuster unterschiedlich ist.

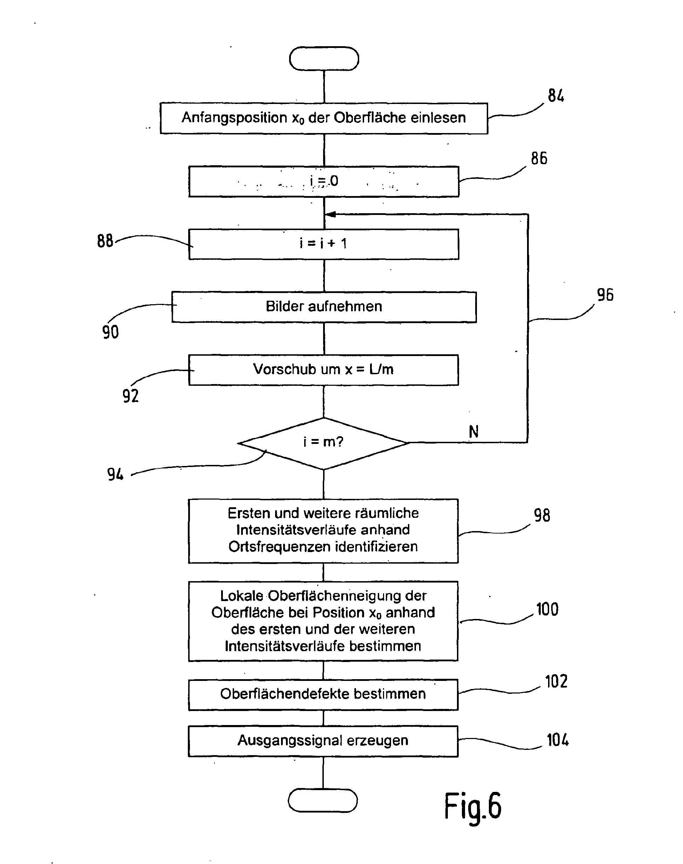

Fig. 6 zeigt anhand eines Flussdiagramms ein Ausführungsbeispiel des neuen Verfahrens. Gemäß Schritt 84 wird zunächst die Anfangsposition $x_0$ der zu inspizierenden Oberfläche bestimmt. In bevorzugten Ausführungsbeispielen werden Positionsgeber eingelesen, mit deren Hilfe die Position des Autos 16 in dem Tunnel 12 bestimmt werden kann.

Gemäß Schritt 86 wird eine Zählvariable i = 0 gesetzt. Im Schritt 88 wird die Zählvariable i inkrementiert. Im Schritt 90 werden Bilder der zu inspizierenden Oberfläche mit den Bildaufnahmeeinheiten 42 bis 48 aufgenommen. Anschließend erfolgt gemäß Schritt 90 ein Vorschub des Autos 16 um eine Teildistanz x = v/m, wobei v die definierte Gesamtschiebedistanz 74 bezeichnet und wobei m die Anzahl der Bilder für eine Bildfolge entlang der Schiebedistanz 74 bezeichnet.

Gemäß Schritt 94 wird geprüft, ob die Schiebedistanz 74 vollständig durchlaufen worden ist. Ist dies nicht der Fall, verzweigt das Verfahren gemäß der Schleife 96 zum Schritt 88. Dort wird die Zählvariable i inkrementiert und es werden im Schritt 90 weitere Bilder aufgenommen.

Sobald die benötigte Anzahl an Bildern aufgenommen wurde, stehen für den betrachteten Oberflächenpunkt 64 genügend Bilddaten zur Verfügung. Gemäß Schritt 98 werden zunächst die Intensitätsverläufe, die von den verschiedenen Streifenmustern gebildet werden, anhand der unterschiedlichen Ortsfrequenzen getrennt. Dies beinhaltet in bevorzugten Ausführungsbeispielen eine digitale Filterung der Bilddaten in Bezug auf die verschiedenen effektiven Ortsfrequenzen durch Korrelation mit Vergleichssignalen, die speziell die jeweils gesuchte Ortsfrequenz enthalten.

Gemäß Schritt 100 wird anschließend die lokale Oberflächenneigung der Oberfläche an dem betrachteten Oberflächenpunkt 64 bestimmt. Dies kann anhand eines ausgewählten Intensitätsverlaufs geschehen oder anhand mehrerer Intensitätsverläufe, die separat ausgewertet werden.

Gemäß Schritt 102 werden dann anhand der lokalen Oberflächenneigung Oberflächendefekte bestimmt. Gemäß Schritt 104 wird ein Ausgangssignal erzeugt, das die in Schritt 102 bestimmten Oberflächendefekte und/oder die Qualität der inspizierten Oberfläche repräsentiert.

Wie eingangs bereits erwähnt wurde, können die verschiedenen Streifenmuster zusätzlich noch spektral codiert sein, um eine noch höhere Anzahl von Streifenmustern zu einem Gesamtmuster zu überlagern.

In weiteren Ausführungsbeispielen der Erfindung kann die zu inspizierende Oberfläche stationär gehalten werden, während die überlagerten Streifenmuster relativ zu der Oberfläche verschoben werden. In diesem Fall kann eine stationäre Bildaufnahmeeinheit verwendet werden, die die zu inspizierende Oberfläche mehrfach aufnimmt.

In weiteren Ausführungsbeispielen können Kameraköpfe 38, 40 der in Fig. 1 gezeigten Art an dem Transportwagen 20 angeordnet sein, so dass sie mit dem Auto 16 mitgeführt werden. Auch in diesem Fall genügt eine Bildaufnahmeeinheit pro Kamerakopf, da die relative Position zwischen Bildaufnahmeeinheit und der zu inspizierenden Oberfläche nicht verändert wird.

## Patentansprüche

1. Verfahren zum optischen Inspizieren einer Oberfläche (17) an einem Gegenstand (16), mit den Schritten:

- Bereitstellen eines Musters (29) mit einer Vielzahl von helleren und dunkleren Bereichen (30, 31, 32, 33), die einen ersten räumlichen Intensitätsverlauf mit einer ersten räumlichen Periode (36) bilden,
- Positionieren des Gegenstandes (16) mit der Oberfläche (17) relativ zu dem Muster (29) derart, dass der erste Intensitätsverlauf (34) auf die Oberfläche (17) fällt,
- Verschieben des ersten Intensitätsverlaufs (34) relativ zu der Oberfläche (17) um eine definierte Schiebedistanz (74), wobei die Oberfläche (17) entlang der Schiebedistanz (74) eine Vielzahl von unterschiedlichen Positionen ($P_0$, $P_1$, $P_2$, $P_3$) relativ zu dem ersten Intensitätsverlauf (34) einnimmt,
- Aufnehmen einer Vielzahl von Bildern, die die Oberfläche (17) mit dem ersten Intensitätsverlauf (34) an den unterschiedlichen Positionen ($P_0$, $P_1$, $P_2$, $P_3$) zeigen, und
- Bestimmen von Eigenschaften der Oberfläche (17) in Abhängigkeit von den Bildern,

wobei das Muster (29) eine Überlagerung von zumindest zwei verschiedenen Streifenmustern (26, 28) beinhaltet, die gemeinsam auf die Oberfläche (17) fallen, wobei ein erstes Streifenmuster (26) den ersten räumlichen Intensitätsverlauf (34; 34a) mit der ersten räumlichen Periode (36; 36a) bildet, wobei ein weiteres Streifenmuster (28) einen weiteren räumlichen Intensitätsverlauf (34b) mit einer weiteren räumlichen Periode (36b) bildet, wobei die Streifenmuster (26, 28) vor dem Bestimmen der Eigenschaften der Oberfläche (17) mit Hilfe einer Filterung getrennt werden, und wobei die Eigenschaften der Oberfläche (17) in Abhängigkeit von dem ersten und/oder in Abhängigkeit von dem weiteren Streifenmuster (26, 28) bestimmt werden, **dadurch gekennzeichnet, dass** das erste und weitere Streifenmuster (26, 28) beim Verschieben der Oberfläche (17) über die Schiebedistanz (74) so geschnitten werden, dass für jedes Streifenmuster (26, 28) eine individuelle, ganzzahlige Anzahl von Perioden (36) durchlaufen wird, wobei die Anzahl eine effektive Ortsfrequenz darstellt, anhand der die Streifenmuster (26, 28) getrennt werden.

2. Verfahren nach Anspruch 1, **dadurch gekennzeichnet, dass** die unterschiedlichen Positionen ($P_0$, $P_1$, $P_2$, $P_3$) entlang der definierten Schiebedistanz (74) mit relativen Abständen (60) verteilt sind, die kleiner sind als die kleinste räumliche Periode (36) aller verwendeten Intensitätsverläufe (34) geteilt durch 2.

3. Verfahren nach Anspruch 1 oder 2, **dadurch gekennzeichnet, dass** der Gegenstand (16) mit der Oberfläche (17) stationär angeordnet wird, wobei das Muster (29) mit den Intensitätsverläufen (34) relativ zu der Oberfläche (17) verändert wird.

4. Verfahren nach einem der Ansprüche 1 oder 2, **dadurch gekennzeichnet, dass** das Muster (29) mit den Intensitätsverläufen (34) stationär angeordnet wird, wobei der der Gegenstand (16) mit der Oberfläche (17) relativ zu dem Muster (29) verschoben wird.

5. Verfahren nach einem der Ansprüche 1 bis 4, **dadurch gekennzeichnet, dass** das erste und das weitere Streifenmuster (26, 28) relativ zueinander stationär sind.

6. Verfahren nach einem der Ansprüche 1 bis 5, **dadurch gekennzeichnet, dass** das erste Streifenmuster (26) erste Streifen (30, 31) aufweist und dass das zumindest eine weitere Streifenmuster (28) weitere Streifen (32, 33) aufweist, wobei sich die ersten und die weiteren Streifen (30, 31, 32, 33) kreuzen.

7. Verfahren nach einem der Ansprüche 1 bis 6, **dadurch gekennzeichnet, dass** die ersten Streifen (30, 31) und die weiteren Streifen (32, 33) jeweils gleiche räumliche Perioden (36) bilden, jedoch relativ zu der Schiebedistanz (74) unterschiedlich geneigt sind.

8. Verfahren nach einem der Ansprüche 1 bis 7, **dadurch gekennzeichnet, dass** das erste Streifenmuster (26) und das zumindest eine weitere Streifenmuster (28) zueinander parallele erste und weitere Streifen (30, 31, 32, 33) aufweisen.

9. Verfahren nach einem der Ansprüche 1 bis 8, **dadurch gekennzeichnet, dass** das Muster einen Bereich (66) mit maximaler Helligkeit und einen weiteren Bereich (68) mit minimaler Helligkeit aufweist, wobei die maximale und die minimale Helligkeit eine Intensitätsamplitude (70) des Musters definieren, wobei jedes Streifenmuster (26, 28) eine Streifenmusteramplitude (72) besitzt, und wobei die Summe der Streifenmusteramplituden (72) aller Streifenmuster (26, 28) gleich der Intensitätsamplitude (70) des Musters (29) ist.

10. Verfahren nach einem der Ansprüche 1 bis 9, **dadurch gekennzeichnet, dass** die Streifenmuster (26, 28) jeweils eine sich räumlich weitgehend kontinuierlich ändernde Intensität aufweisen.

11. Verfahren nach einem der Ansprüche 1 bis 10, **dadurch gekennzeichnet, dass** die zumindest zwei verschiedenen Streifenmuster (26, 28) spektral unterschiedlich ausgebildet sind.

12. Vorrichtung zum optischen Inspizieren einer Oberfläche (17) an einem Gegenstand (16), mit:

- einem Muster (29) mit einer Vielzahl von helleren und dunkleren Bereichen (30, 31, 32, 33), die einen ersten räumlichen Intensitätsverlauf (34) mit einer ersten räumlichen Periode (36) bilden,
- einer Aufnahme (20) zum Positionieren des Gegenstandes (16) mit der Oberfläche (17) relativ zu dem Muster (29) derart, dass der erste Intensitätsverlauf (34) auf die Oberfläche (17) fällt,
- einer Steuereinheit (52) zum Verschieben des ersten Intensitätsverlaufs (34) relativ zu der Oberfläche (17) um eine definierte Schiebedistanz (74), wobei die Oberfläche (17) entlang der Schiebedistanz (74) eine Vielzahl von unterschiedlichen Positionen ($P_0$, $P_1$, $P_2$, $P_3$) rela-

tiv zu dem ersten Intensitätsverlauf (34) einnimmt,

- zumindest einer Bildaufnahmeeinheit (42, 44, 46, 48) zum Aufnehmen einer Vielzahl von Bildern, die die Oberfläche (17) mit dem ersten Intensitätsverlauf (34) an den unterschiedlichen Positionen ($P_0$, $P_1$, $P_2$, $P_3$) zeigen, und

- einer Auswerteeinheit (52) zum Bestimmen von Eigenschaften der Oberfläche (17) in Abhängigkeit von den Bildern,

wobei das Muster (29) eine Überlagerung von zumindest zwei verschiedenen Streifenmustern (26, 28) beinhaltet, die gemeinsam auf die Oberfläche (17) fallen, wobei ein erstes Streifenmuster (26) den ersten räumlichen Intensitätsverlauf (34; 34a) mit der ersten räumlichen Periode (36; 36a) bildet, wobei ein weiteres Streifenmuster (28) einen weiteren räumlichen Intensitätsverlauf (34b) mit einer weiteren räumlichen Periode (36b) bildet, wobei ein Filter (51; 56) vorgesehen ist, um die Streifenmuster (26, 28) vor dem Bestimmen der Eigenschaften der Oberfläche (17) zu trennen, und wobei die Auswerteinheit (52) dazu ausgebildet ist, die Eigenschaften der Oberfläche (17) in Abhängigkeit von dem ersten und/oder in Abhängigkeit von dem weiteren Streifenmuster (26, 28) zu bestimmen, **dadurch gekennzeichnet, dass** das erste und weitere Streifenmuster (26, 28) beim Verschieben der Oberfläche (17) über die Schiebedistanz (74) so geschnitten werden, dass für jedes Streifenmuster (26, 28) eine individuelle, ganzzahlige Anzahl von Perioden (36) durchlaufen wird, wobei die Anzahl eine effektive Ortsfrequenz darstellt, anhand der das Filter (56) die Streifenmuster (26, 28) trennt.

**13.** Computerprogramm mit Programmcode, der auf einem Datenträger gespeichert ist und der dazu ausgebildet ist, ein Verfahren nach einem der Ansprüche 1 bis 11 auszuführen, wenn der Programmcode auf einem Computer ausgeführt wird.

**Claims**

**1.** Method for the optical inspection of a surface (17) on an object (16), having the steps of:

- providing a pattern (29) with a multiplicity of lighter and darker regions (30, 31, 32, 33), which form a first spatial intensity profile with a first spatial period (36),
- positioning the object (16) with the surface (17) in relation to the pattern (29) in such a way that the first intensity profile (34) falls onto the surface (17),
- displacing the first intensity profile (34) in relation to the surface (17) by a defined displacement distance (74), the surface (17) assuming along the displacement distance (74) a multiplicity of different positions ($P_0$, $P_1$, $P_2$, $P_3$) in relation to the first intensity profile (34),

- recording a multiplicity of images which show the surface (17) with the first intensity profile (34) at the different positions ($P_0$, $P_1$, $P_2$, $P_3$), and

- determining properties of the surface (17) as a function of the images,

the pattern (29) including a superimposition of at least two different strip patterns (26, 28) which fall together onto the surface (17), a first strip pattern (26) forming the first spatial intensity profile (34; 34a) with the first spatial period (36; 36a), a further strip pattern (28) forming a further spatial intensity profile (34b) with a further spatial period (36b), the strip patterns (26, 28) being separated with the aid of filtering before the determination of the properties of the surface (17), and the properties of the surface (17) being determined as a function of the first and/or as a function of the further strip patterns (26, 28), **characterized in that** the first and further strip patterns (26, 28) are cut during the displacement of the surface (17) over the displacement distance (74) such that an individual, integral number of periods (36) are traversed for each strip pattern (26, 28), the number representing an effective spatial frequency with the aid of which the strip patterns (26, 28) are separated.

**2.** Method according to Claim 1, **characterized in that** different positions ($P_0$, $P_1$, $P_2$, $P_3$) along the defined displacement distance (74) are distributed with relative spacings (60) which are smaller than the smallest spatial period (36) of all intensity profiles (34) used divided by two.

**3.** Method according to Claim 1 or 2, **characterized in that** the object (16) with the surface (17) is arranged in a stationary fashion, the pattern (29) with the intensity profiles (34) being varied in relation to the surface (17).

**4.** Method according to either of Claims 1 and 2, **characterized in that** the pattern (29) with the intensity profiles (34) is arranged in a stationary fashion, the object (16) with the surface (17) being displaced in relation to the pattern (29).

**5.** Method according to one of Claims 1 to 4, **characterized in that** the first and the further strip patterns (26, 28) are stationary in relation to one another.

**6.** Method according to one of Claims 1 to 5, **characterized in that** the first strip pattern (26) has first strips (30, 31) and **in that** at least one further strip pattern (28) has further strips (32, 33), the first and the further strips (30, 31, 32, 33) crossing one another.

**7.** Method according to one of Claims 1 to 6, **characterized in that** the first strips (30, 31) and the further strips (32, 33) in each case form equal spatial periods (36), although they are differently inclined in relation to the displacement distance (74).

**8.** Method according to one of Claims 1 to 7, **characterized in that** the first strip pattern (26) and the at least one further strip pattern (28) have first and further strips (30, 31, 32, 33) parallel to one another.

**9.** Method according to one of Claims 1 to 8, **characterized in that** the pattern has a region (66) with maximum brightness and a further region (68) with minimum brightness, the maximum and the minimum brightnesses defining an intensity amplitude (70) of the pattern, each strip pattern (26, 28) having a strip pattern amplitude (72), and the sum of the strip pattern amplitudes (72) of all the strip patterns (26, 28) being equal to the intensity amplitude (70) of the pattern (29).

**10.** Method according to one of Claims 1 to 9, **characterized in that** the strip patterns (26, 28) respectively have an intensity changing spatially in a largely continuous fashion.

**11.** Method according to one of Claims 1 to 10, **characterized in that** the at least two different strip patterns (26, 28) are of different spectral design.

**12.** Device for the optical inspection of a surface (17) of an object (16), having:

- a pattern (29) with a multiplicity of lighter and darker regions (30, 31, 32, 33), which form a first spatial intensity profile (34) with a first spatial period (36),
- a holder (20) for positioning the object (16) with the surface (17) in relation to the pattern (29) in such a way that the first intensity profile (34) falls onto the surface (17),
- a control unit (52) for displacing the first intensity profile (34) in relation to the surface (17) by a defined displacement distance (74), the surface (17) assuming along the displacement distance (74) a multiplicity of different positions ($P_0$, $P_1$, $P_2$, $P_3$) in relation to the first intensity profile (34),
- at least one image recording unit (42, 44, 46, 48) for recording a multiplicity of images which show the surface (17) with the first intensity profile (34) at the different positions ($P_0$, $P_1$, $P_2$, $P_3$), and
- an evaluation unit (52) for determining properties of the surface (17) as a function of the images,

the pattern (29) including a superimposition of at least two different strip patterns (26, 28) which fall together onto the surface (17), a first strip pattern (26) forming the first spatial intensity profile (34; 34a) with the first spatial period (36; 36a), a further strip pattern (28) forming a further spatial intensity profile (34b) with a further spatial period (36b), a filter (51; 56) being provided in order to separate the strip patterns (26, 28) before the determination of the properties of the surface (17), and the evaluation unit (52) being designed to determine the properties of the surface (17) as a function of the first and/or as a function of the further strip patterns (26, 28), **characterized in that** the first and further strip patterns (26, 28) are cut during the displacement of the surface (17) over the displacement distance (74) such that an individual, integral number of periods (36) are traversed for each strip pattern (26, 28), the number representing an effective spatial frequency with the aid of which the strip patterns (26, 28) are separated by the filter (56).

**13.** Computer program with program code which is stored on a data medium and is designed to execute a method according to one of Claims 1 to 11 when the program code is executed on a computer.

## Revendications

**1.** Procédé d'inspection optique d'une surface (17) d'un objet (16), le procédé comportant les étapes qui consistent à :

- préparer un motif (29) qui présente plusieurs zones claires et plusieurs zones sombres (30, 31, 32, 33) qui forment une première évolution spatiale d'intensité qui présente une première période spatiale (36),
- positionner l'objet (16) de telle sorte que sa surface (17) soit disposée par rapport au motif (29) de manière à ce que la première évolution d'intensité (34) tombe sur la surface (17),
- déplacer la première évolution d'intensité (34) par rapport à la surface (17) d'une distance définie de déplacement (74), la surface (17) prenant le long de la distance de déplacement (74) plusieurs positions différentes ($P_0$, $P_1$, $P_2$, $P_3$) par rapport à la première évolution d'intensité (34),
- enregistrer plusieurs images qui représentent la surface (17) avec la première évolution d'intensité (34) aux différentes positions ($P_0$, $P_1$, $P_2$, $P_3$) et
- déterminer des propriétés de la surface (17) en fonction des images,

le motif (29) contenant une superposition d'au moins deux motifs en rubans (26, 28) différents qui tombent ensemble sur la surface (17), un premier motif en rubans (26) formant la première évolution spatiale d'intensité (34; 34a) à la première période spatiale (36; 36a), un autre motif en rubans (28) formant une autre évolution spatiale d'intensité (34b) à une autre période spatiale (36b), les motifs en rubans (26, 28) étant séparés à l'aide d'un filtrage avant la détermination des propriétés de la surface (17) et les propriétés de la surface (17) étant déterminées en fonction du premier et/ou en fonction de l'autre motif en rubans (26, 28),
**caractérisé en ce que** le premier motif en rubans et l'autre motif en rubans (26, 28) sont découpés lors du déplacement de la surface (17) sur la distance de déplacement (74) de telle sorte que pour chaque motif en rubans (26, 28), un nombre distinct et entier de périodes (36) soit parcouru, le nombre représentant une fréquence locale effective à l'aide de laquelle les motifs en rubans (26, 28) sont séparés.

2.  Procédé selon la revendication 1, **caractérisé en ce que** les différentes positions ($P_0$, $P_1$, $P_2$, $P_3$) sont réparties le long de la distance définie de déplacement (74) à des intervalles relatifs (60) inférieurs à la plus petite période spatiale (36) de toutes les évolutions d'intensité (34) utilisées divisée par 2.

3.  Procédé selon la revendication 1 ou 2, **caractérisé en ce que** l'objet (16) qui présente la surface (17) est disposé en position stationnaire, le motif (29) qui présente les évolutions d'intensité (34) étant modifié par rapport à la surface (17).

4.  Procédé selon l'une des revendications 1 ou 2, **caractérisé en ce que** le motif (29) qui présente les évolutions d'intensité (34) est disposé en position stationnaire, l'objet (16) qui présente la surface (17) étant déplacé par rapport au motif (29).

5.  Procédé selon l'une des revendications 1 à 4, **caractérisé en ce que** le premier et l'autre motif en rubans (26, 28) sont stationnaires l'un par rapport à l'autre.

6.  Procédé selon l'une des revendications 1 à 5, **caractérisé en ce que** le premier motif en rubans (26) présente des premiers rubans (30, 31) et **en ce qu'**au moins un autre motif en rubans (28) présente d'autres rubans (32, 33), les premiers rubans et les autres rubans (30, 31, 32, 33) se croisant.

7.  Procédé selon l'une des revendications 1 à 6, **caractérisé en ce que** les premiers rubans (30, 31) et les autres rubans (32, 33) ont tous la même période spatiale (36) mais sont inclinés différemment par rapport à la distance de déplacement (74).

8.  Procédé selon l'une des revendications 1 à 7, **caractérisé en ce que** le premier motif en rubans (26) et le ou les autres motifs en rubans (28) présentent des premiers rubans et d'autres rubans (30, 31, 32, 33) parallèles les uns aux autres.

9.  Procédé selon l'une des revendications 1 à 8, **caractérisé en ce que** le motif présente une partie (66) à luminosité maximale et une autre partie (68) à luminosité minimale, la luminosité maximale et la luminosité minimale définissant une amplitude d'intensité (70) du motif, chaque motif en rubans (26, 28) possédant une amplitude (72) de motif en rubans et la somme des amplitudes (72) de tous les motifs en rubans (26, 28) étant égale à l'amplitude d'intensité (70) du motif (29).

10.  Procédé selon l'une des revendications 1 à 9, **caractérisé en ce que** l'intensité de tous les motifs en rubans (26, 28) varie de manière largement continue dans l'espace.

11.  Procédé selon l'une des revendications 1 à 10, **caractérisé en ce que** les deux ou plusieurs motifs en rubans (26, 28) différents ont des configurations spectrales différentes.

12.  Dispositif d'inspection optique d'une surface (17) d'un objet (16), comportant :

     - un motif (29) qui présente plusieurs zones claires et plusieurs zones sombres (30, 31, 32, 33) qui forment une première évolution spatiale d'intensité (34) qui présente une première période spatiale (36),
     - un logement (20) qui permet de positionner l'objet (16) de telle sorte que sa surface (17) soit disposée par rapport au motif (29) de manière à ce que la première évolution d'intensité (34) tombe sur la surface (17),
     - une unité de commande (52) qui déplace la première évolution d'intensité (34) par rapport à la surface (17) d'une distance définie de déplacement (74), la surface (17) prenant le long de la distance de déplacement (74) plusieurs positions différentes ($P_0$, $P_1$, $P_2$, $P_3$) par rapport à la première évolution d'intensité (34),
     - au moins une unité (42, 44, 46, 48) d'enregistrement d'images qui enregistre plusieurs images qui représentent la surface (17) avec la première évolution d'intensité (34) aux différentes positions ($P_0$, $P_1$, $P_2$, $P_3$) et
     - une unité d'évaluation (52) qui détermine des propriétés de la surface (17) en fonction des images,

le motif (29) contenant une superposition d'au moins deux motifs en rubans (26, 28) différents qui tombent ensemble sur la surface (17), un premier motif en rubans (26) formant la première évolution spatiale d'intensité (34; 34a) à la première période spatiale (36; 36a), un autre motif en rubans (28) formant une autre évolution spatiale d'intensité (34b) à une autre période spatiale (36b), un filtre (51; 56) étant prévu pour séparer les motifs en rubans (26, 28) avant la détermination des propriétés de la surface (17) et l'unité d'évaluation étant configurée pour déterminer les propriétés de la surface (17) en fonction du premier et/ou en fonction de l'autre motif en rubans (26, 28),

**caractérisé en ce que** le premier motif en rubans et l'autre motif en rubans (26, 28) sont découpés lors du déplacement de la surface (17) sur la distance de déplacement (74) de telle sorte qu'un nombre distinct et entier de périodes (36) soit parcouru par chaque motif en rubans (26, 28), le nombre représentant une fréquence locale effective à l'aide de laquelle le filtre (56) sépare les motifs en rubans (26, 28).

13. Programme informatique qui présente un code de programme conservé en mémoire sur un support de données et configuré pour exécuter un procédé selon l'une des revendications 1 à 11 lorsque le code de programme est exécuté sur un ordinateur.

Fig.1

EP 2 167 948 B1

Fig.2

Fig.3

Fig.4

Fig.5

Anfangsposition $x_0$ der Oberfläche einlesen — 84

$i = 0$ — 86

88 — $i = i + 1$

Bilder aufnehmen
90

Vorschub um $x = L/m$
92

$i = m?$ — N
94

96

Ersten und weitere räumliche Intensitätsverläufe anhand Ortsfrequenzen identifizieren — 98

Lokale Oberflächenneigung der Oberfläche bei Position $x_0$ anhand des ersten und der weiteren Intensitätsverläufe bestimmen — 100

Oberflächendefekte bestimmen — 102

Ausgangssignal erzeugen — 104

Fig.6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10317078 A1
- US 20030016366 A1
- EP 1170572 A2
- US 5636024 A
- DE 19821059 C2
- DE 102004033526 A1
- US 6100990 A
- US 5726705 A
- EP 2008005682 W
- WO 2009007129 A

**In der Beschreibung aufgeführte Nicht-Patentliteratur**

- Vermessung spiegelnder Oberflächen - eine Aufgabe der optischen drei D-Sensorik. **Markus Knauer.** DE-Zeitschrift Photonik. April 2004, 62-64
- Deflektometrie zur Qualitätsprüfung spiegelnd reflektierender Oberflächen. **von Sören Kammel.** DE-Zeitschrift tm - Technisches Messen. April 2003, 193-198
- **von R. Seulin et al.** Dynamic Lighting System for Specular Surface Inspection. *Proceedings of SPIE,* 2001, vol. 4301, 199-206